# EUROPEAN PATENT APPLICATION

(11) **EP 4 545 359 A1**
(43) Date of publication of application: **30.04.2025**
(21) Application number: 23892748.7
(22) Date of filing: 22.11.2023
(51) Int. Cl.: B60R 3/02

(54) **LONG-STROKE ELECTRIC SIDE STEP AND VEHICLE**

(30) Priority: 12.09.2023 CN 202322472793 U
(71) Applicant: Zhongshan Auto Electronics Technology Co., Ltd, Zhongshan, Guangdong 528400 (CN)
(72) Inventor: ZHANG, Jingyu, Zhongshan, Guangdong 528400 (CN); GUO, Xuanmo, Zhongshan, Guangdong 528400 (CN); WEI, Tianlong, Zhongshan, Guangdong 528400 (CN); WANG, Jin, Zhongshan, Guangdong 528400 (CN)
(74) Representative: Chung, Hoi Kan
(86) International application number: PCT/CN2023/133232
(87) International publication number: WO 2025/055120

(57) **Abstract**

Provided is a long moving distance electric pedal and vehicle. The electric pedal comprises a pedal body, a first mounting bracket, a second mounting bracket, a driving device, and two sets of transmission components; the transmission components include a first pivot plate and a second pivot plate, one end of which are hinged with the first or second mounting bracket, and the other end of which are hinged with one or the other end of the pedal body; when the pedal body is in a retracted state, the angle between the center lines of the first pivot plate and the second pivot plate is an acute angle, and the intersection point between the center lines of the first pivot plate and the second pivot plate is located above the connection point between the driving device and the transmission components. According to the above structure, a longer Y-axis travelling can be achieved with a smaller swing angle.

## Description

### TECHNICAL FIELD

The present invention relates to the field of automobiles, and more particularly relates to a long moving distance electric pedal.

### BACKGROUND

In some SUV and MPV models, due to their higher chassis compared to sedans, it is not conducive to the boarding and alighting of drivers and passengers. Therefore, these models generally set pedals to assist drivers and passengers in getting on and off the vehicle. The pedals are generally divided into fixed pedals and electric pedals, which are fixedly installed on the vehicle body. The electric pedal drives the pedal body through the electric drive structure, allowing the pedal body to move relatively to the vehicle body. However, in order to achieve a longer Y-axis travelling, the pivot plate will be designed longer in the existing electric pedals, resulting in an increase in the Z-axis travelling of the electric pedal. This makes the electric pedal occupy more space in the Z-axis direction when in the retracted and stretched-out states. Moreover, this structure of electric pedals requires a larger swing angle to achieve a longer Y-axis travelling, which can easily cause scratches and collisions with ground obstacles during driving, leading to the damage. Therefore, there is an urgent need for a long moving distance electric pedal to solve the above problems.

### SUMMARY

The present invention aims to solve at least one of the technical problems existing in the prior art. Therefore, the present invention provides a long moving distance electric pedal.

The technical solution adopted to solve the technical problems in one embodiment of the present invention is: a long moving distance electric pedal, comprising a pedal body, a first mounting bracket, a second mounting seat bracket, a driving device, and two sets of transmission components; the first mounting bracket is connected to one end of the pedal body through a set of transmission components; the second mounting bracket is connected to the other end of the pedal body through another set of transmission components; the driving device is connected to the transmission components to drive the pedal body to stretch out or retract through the transmission components; the transmission components include a first pivot plate and a second pivot plate; one end of the first pivot plate and one end of the second pivot plate are hinged with the first or second mounting bracket, the other end of the first pivot plate and the other end of the second pivot plate are hinged with one or the other end of the pedal body; when the pedal body is in a retracted state, the angle between the center line of the first pivot plate and the center line of the second pivot plate is an acute angle, and the intersection point between the center line of the first pivot plate and the center line of the second pivot plate is located above the connection point between the driving device and the transmission components.

Preferably, when the pedal body is in a retracted state, the angle between the centre line of the first pivot plate and the center line of the second pivot plate is greater than 5°and less than 90°.

Preferably, when the pedal body is in a retracted state, the angle between the upper end surface of the pedal body and the horizontal plane is less than or equal to 15°, and when the pedal body is in an stretched-out state, the angle between the upper end surface of the pedal body and the horizontal plane is less than or equal to 5 °.

Preferably, the driving device is set as a motor, the output shaft of the motor is connected to one end of the first pivot plate or one end of the second pivot plate, and the rotation angle of the output shaft of the motor is less than or equal to 130 °.

Preferably, the displacement of the pedal body in the Y-axis direction is greater than or equal to 100mm.

Preferably, a first hinge point exists between the first pivot plate and the first mounting bracket or second mounting bracket, a second hinge point exists between the second pivot plate and the first mounting bracket or second mounting bracket, a third hinge point exists between the first pivot plate and one end of the pedal body or the other end of the pedal body, and a fourth hinge point exists between the second pivot plate and one end of the pedal body or the other end of the pedal body; when the pedal body is in the retracted state, the distance between the two farthest hinge points in the Y-axis direction selected from the first hinge point, the second hinge point, the third hinge point and the fourth hinge point is less than or equal to 98mm.

Preferably, a first hinge point exists between the first pivot plate and the first mounting bracket or second mounting bracket, a second hinge point exists between the second pivot plate and the first mounting bracket or second mounting bracket, a third hinge point exists between the first pivot plate and one end of the pedal body or the other end of the pedal body, and a fourth hinge point exists between the second pivot plate and one end of the pedal body or the other end of the pedal body; when the pedal body is in the retracted state, the distance between the two farthest hinge points in the Z-axis direction selected from the first hinge point, the second hinge point, the third hinge point and the fourth hinge point is less than or equal to 50mm.

A vehicle, comprising the above electric pedal.

The beneficial effects of the present invention are as follow:
The present invention provides a long moving distance electric pedal and vehicle. The electric pedal comprises a pedal body, a first mounting bracket, a second mounting bracket, a driving device, and two sets of transmission components; the first mounting bracket is connected to one end of the pedal body through a set of transmission components; the second mounting bracket is connected to the other end of the pedal body through another set of transmission components; the driving device is connected to the transmission components to drive the pedal body to stretch out or retract through the transmission components; the transmission components include a first pivot plate and a second pivot plate; one end of the first pivot plate and one end of the second pivot plate are hinged with the first or second mounting bracket; the other end of the first pivot plate and the other end of the second pivot plate are hinged with one or the other end of the pedal body; when the pedal body is in a retracted state, the angle between the center line of the first pivot plate and the center line of the second pivot plate is an acute angle, and the intersection point between the center line of the first pivot plate and the center line of the second pivot plate is located above the connection point between the driving device and the transmission components. Through the above structure, a longer distance in Y-axis travelling can be achieved with a smaller swing angle, which not only reduces the volume of the electric pedal, but also increases the moving distance of the pedal body when in stretched-out state , making it easier for passengers to get on and off the vehicle.

### BRIEF DESCRIPTION OF DRAWINGS

The above and/or additional aspects and advantages of the present invention will become apparent and easy to understand from the description of the embodiment with the following drawings, wherein:
FIG. 1 is an exploded view of a long moving distance electric pedal;
FIG. 2 is an enlarged view of region A in FIG. 1;
FIG. 3 is a structure diagram of the long moving distance electric pedal in the retracted state;
FIG. 4 is a structure diagram of the long moving distance electric pedal in the stretched-out state.

### DETAILED DESCRIPTION OF THE EMBODIMENTS

This section will provide a detailed description of the specific embodiment of the present invention. The preferred embodiment of the present invention is shown in the accompanying drawings. The purpose of the accompanying drawings is to supplement the textual description of the manual with graphics, so that people can intuitively and vividly understand each technical feature and overall technical solution of the present invention. However, it cannot be understood as a limitation on the protection scope of the present invention.

In the description of the present invention, "multiple" means two or more; "greater than", "less than" and "more than" are understood as excluding the original number, while "above", "below" and "within" are understood as including the original number. "First" and "second" described in case are only for the purpose of distinguishing technical features, and cannot be understood as indicating or implying relative importance or implying the quantity or sequence of the indicated technical features.

In the description of the present invention, it should be understood that the directional or positional relationships indicated are based on the directional or positional relationships shown in the drawings when it comes to directional descriptions, such as "up", "down", "front", "back", "left", "right", etc.. And these directional descriptions are only for the convenience of describing the present invention and simplifying the description, rather than indicating or implying that the device or component referred to must have a specific orientation or be constructed and operated in a specific orientation. Therefore, it cannot be understood as a limitation on the present invention.

In the present invention, unless otherwise specified limitation, words such as "setting", "installation", "connection", etc. should be broadly understood, for example, they can be directly connected or indirectly connected through intermediate media; and they can be a fixed connection, a detachable connection, or an integrated molding; and they can be a mechanical connection; and they can be the internal connectivity of two components or the interaction relationship between two components. Technicians in the technical field of the present invention can reasonably determine the specific meanings of the above words in this invention based on the specific content of the technical solution.

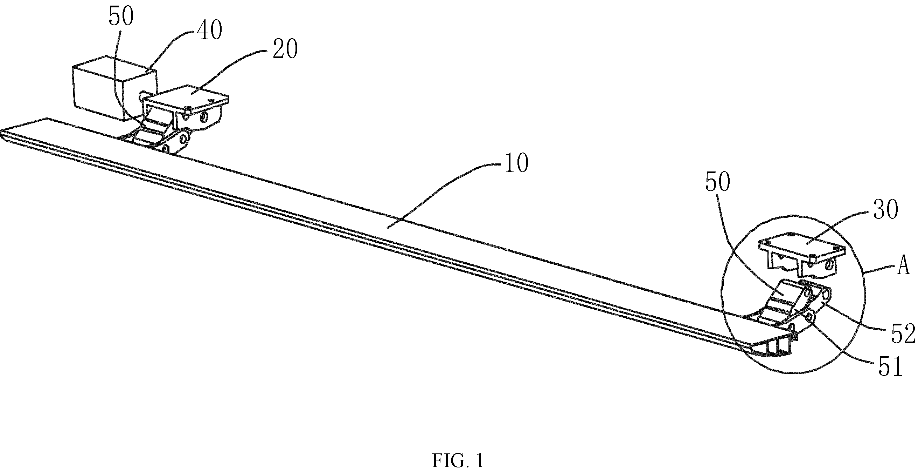

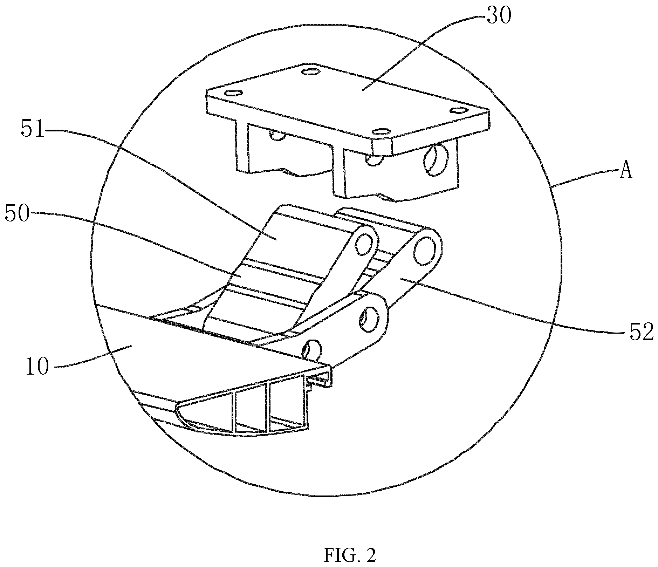

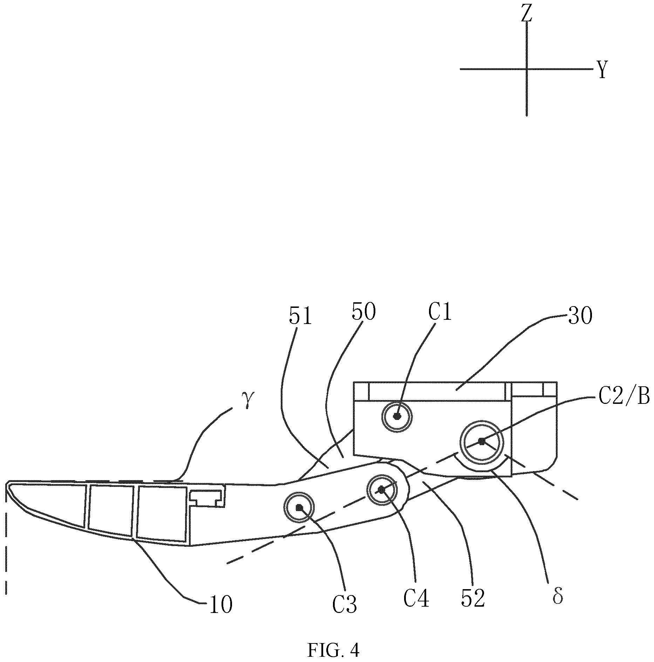

With reference to FIG. 1 to FIG.4, a long moving distance electric pedal comprises a pedal body 10, a first mounting bracket 20, a second mounting bracket 30, a driving device 40, and two sets of transmission components 50.

The first mounting bracket 20 is connected to one end of the pedal body 10 through a set of transmission components 50.

The second mounting bracket 30 is connected to the other end of the pedal body 10 through another set of transmission components 50.

The driving device 40 is connected to the transmission component 50 to drive the pedal body 10 to stretch out or retract through the transmission component 50.

The transmission component 50 includes a first pivot plate 51 and a second pivot plate 52. One end of the first pivot plate 51 and one end of the second pivot plate 52 are hinged with the first mounting bracket 20 or the second mounting bracket 30. The other end of the first pivot plate 51 and the other end of the second pivot plate 52 are hinged with one end or the other end of the pedal body 10. When the pedal body 10 is in a retracted state, the angle α between the center line A1 of the first pivot plate 51 and the center line A2 of the second pivot plate 52 is an acute angle, and the intersection point between the center line A1 of the first pivot plate 51 and the center line A2 of the second pivot plate 52 is located above the connection point B between the driving device 40 and the transmission component 50.

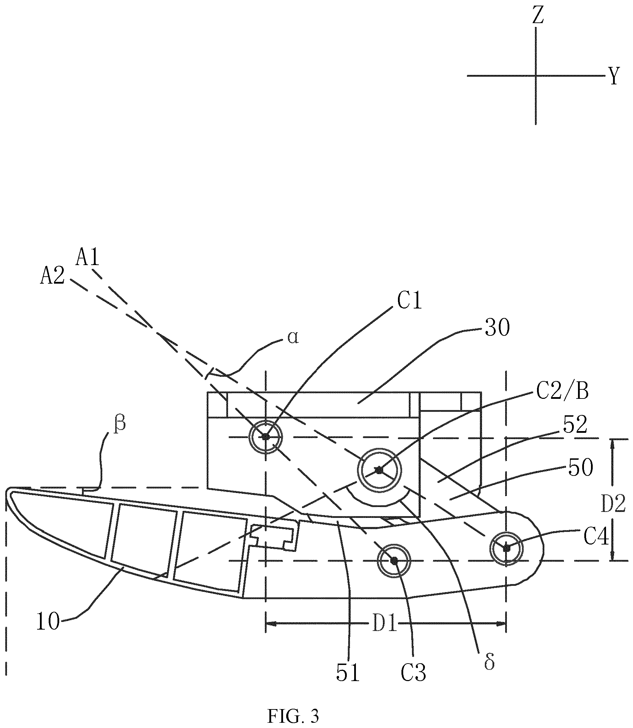

The first mounting bracket 20 and the second mounting bracket 30 are installed on the chassis of the vehicle body. The driving device 40 is electrically connected to the driving computer. When the driving device 40 receives a control command sent by the driving computer, it will drive one end of the second pivot plate 52 to rotate through its output shaft, causing the first pivot plate 51 and the second pivot plate 52 to swing, and then driving the pedal body 10 to stretch out, with reference to the state converted from FIG. 3 to FIG. 4. It should be noted that there are two sets of transmission components 50. The first set is connected between the first mounting bracket 20 and one end of the pedal body 10, and the second set is connected between the second mounting bracket 30 and the other end of the pedal body 10. The various parameters in the present invention are based on the same set of transmission components 50. Referring to Figure 3, in the first set of transmission components 50, one end of the first pivot plate 51 is hinged with the second mounting bracket 30. The other end of the first pivot plate 51 is hinged with the other end of the pedal body 10. One end of the second pivot plate 52 is hinged with the second mounting bracket 30. The other end of the second pivot plate 52 is hinged with the other end of the pedal body 10. When the pedal body 10 is in a retracted state,the angle α between the center line A1 of the first pivot plate 51 and the center line A2 of the second pivot plate 52 is an acute angle, and the intersection point between the center line A1 of the first pivot plate 51 and the center line A2 of the second pivot plate 52 is located above the connection point B between the driving device 40 and the transmission component 50, which can enable the first pivot plate 51 and the second pivot plate 52 to achieve a longer distance in Y-axis travelling with a smaller swing angle during swinging. The advantage of the present invention is that: through the above structure, a longer distance in Y-axis travelling can be achieved with a smaller swing angle, which not only reduces the volume of the electric pedal, but also increases the moving distance of the pedal body when in stretched-out state, making it easier for passengers to get on and off the vehicle.

When the pedal body 10 is in the retracted state, the angle α between the center line A1 of the first pivot plate 51 and the center line A2 of the second pivot plate 52 is greater than 5 ° but less than 90 °.

When the pedal body 10 is in a retracted state, the angle β between the upper end surface of the pedal body 10 and the horizontal plane is less than or equal to 15 °. When the pedal body 10 is in a stretched-out state, the angle γ between the upper end surface of the pedal body 10 and the horizontal plane is less than or equal to 5°. These settings lead to a smaller angle difference which can reduce the movement of the pedal body 10 in the Z-axis direction during the process of stretching out, thereby obtaining more Y-axis movement and then increasing the Y-axis travelling distance.

As a preferred embodiment of the driving device 40, the driving device 40 is set as a motor. The output shaft of the motor is connected to one end of the first pivot plate 51 or one end of the second pivot plate 52. The rotation angle δ of the output shaft of the motor is less than or equal to 130 °. These settings can enable the output shaft of the motor to stretch out the pedal body 10 by at least 100mm in the Y-axis direction at a smaller rotation angle which brings a smalller swing angle to the first pivot plate 51 and the second pivot plate 52.

A first hinge point C1 exists between the first pivot plate 51 and the first mounting bracket 20 or the second mounting bracket 30. A second hinge point C2 exists between the second pivot plate 52 and the first installation seat 20 or the second installation seat 30. A third hinge point C3 exists between the first pivot plate 51 and one end of the pedal body 10 or the other end of the pedal body 10. And a fourth hinge point C4 exists between the second pivot plate 52 and one end of the pedal body 10 or the other end of the pedal body 10. When the pedal body 10 is in a retracted state, the distance between the two farthest hinge points in the Y-axis direction selected from the first hinge point C1, the second hinge point C2 , the third hinge point C3 and the fourth hinge point C4 is less than or equal to 98mm. These settings can control the overall width of the pedal body 10 in the Y-axis direction to be within 98mm when it is in the retracted state, which can reduce the space occupied by the electric pedal in the Y-axis direction of the vehicle body.

A first hinge point C1 exists between the first pivot plate 51 and the first mounting bracket 20 or the second mounting bracket 30. A second hinge point C2 exists between the second pivot plate 52 and the first mounting bracket 20 or the second mounting bracket 30. A third hinge point C3 exists between the first pivot plate 51 and one end of the pedal body 10 or the other end of the pedal body 10. And a fourth hinge point C4 exists between the second pivot plate 52 and one end of the pedal body 10 or the other end of the pedal body 10. When the pedal body 10 is in the retracted state,the distance between the two farthest hinge points in the Z-axis direction selected from the first hinge point C1, the second hinge point C2 ,the third hinge point C3 and the fourth hinge point C4 is less than or equal to 50mm. These settings can control the overall height of the pedal body 10 in the Z-axis direction to be within 50mm when it is in the retracted state, minimizing the space occupied by the electric pedal in the Z-axis direction of the vehicle body, expanding the distance between the electric pedal and the ground as much as possible, and avoiding scratches and collisions between the electric pedal and the ground during vehicle driving.

A vehicle comprises the above electric pedal.
Of course, the present invention is not limited to the above embodiments. Those skilled in the art may also make equivalent modifications or replacements without violating the spirit of the present invention. These equivalent modifications and replacements are all within the scope of the claims of the present application.

## Claims

1. A long moving distance electric pedal, comprising a pedal body (10), a first mounting bracket(20), a second mounting bracket(30), a driving device (40), and two sets of transmission components (50);
wherein, the first mounting bracket(20) is connected to one end of the pedal body (10) through a set of transmission components (50);
wherein, the second mounting bracket(30) is connected to the other end of the pedal body (10) through another set of transmission components (50);
wherein, the driving device (40) is connected to the transmission component (50) to drive the pedal body (10) to stretch out or retract through the transmission components (50);
wherein, the transmission components (50) comprise a first pivot plate (51) and a second pivot plate (52), wherein one end of the first pivot plate (51) and one end of the second pivot plate (52) are hinged with the first mounting bracket(20) or the second mounting bracket(30), and the other end of the first pivot plate (51) and the other end of the second pivot plate (52) are hinged with one end or the other end of the pedal body (10);
wherein, when the pedal body (10) is in a retracted state, the angle(α) between the center line( A1) of the first pivot plate (51) and the center line(A2) of the second pivot plate (52) is an acute angle, and the intersection point between the center line(A1) of the first pivot plate (51) and the center line(A2) of the second pivot plate (52) is located above the connection point(B) between the driving device (40) and the transmission components (50).

2. The long moving distance electric pedal according to claim 1,wherein, when the pedal body (10) is in a retracted state, the angle(β) between the upper end surface of the pedal body and the horizontal plane is less than or equal to 15 °, and when the pedal body (10) is in a stretched-out state, the angle(γ) between the upper end surface of the pedal body (10) and the horizontal plane is less than or equal to 5 °.

3. The long moving distance electric pedal according to claim 1, wherein, the driving device (40) is set as a motor, the output shaft of the motor is connected to one end of the first pivot plate (51) or one end of the second pivot plate (52), and the rotation angle(δ) of the output shaft of the motor is less than or equal to 130 °.

4. The long moving distance electric pedal according to claim 1, wherein, the displacement of the pedal body (10) in the Y-axis direction is greater than or equal to 100mm.

5. The long moving distance electric pedal according to claim 1, wherein, a first hinge point(C1) exists between the first pivot plate (51) and the first mounting bracket(20) or the second mounting bracket(30), a second hinge point(C2) exists between the second pivot plate (52) and the first mounting bracket(20) or the second mounting bracket(30), a third hinge point(C3) exists between the first pivot plate (51) and one end of the pedal body (10) or the other end of the pedal body (10), a fourth hinge point(C4) exists between the second pivot plate (52) and one end of the pedal body (10) or the other end of the pedal body (10), wherein, when the pedal body (10) is in a retracted state, the distance between the two farthest hinge points in the Y-axis direction selected from the first hinge point(C1), the second hinge point(C2) , the third hinge point(C3) and the fourth hinge point(C4) is less than or equal to 98mm.

6. The long moving distance electric pedal according to claim 1, wherein, a first hinge point(C1) exists between the first pivot plate (51) and the first mounting bracket(20) or the second mounting bracket(30), a second hinge point(C2) exists between the second pivot plate (52) and the first mounting bracket(20) or the second mounting bracket(30), a third hinge point(C3) exists between the first pivot plate (51) and one end of the pedal body (10) or the other end of the pedal body (10), a fourth hinge point(C4) exists between the second pivot plate (52) and one end of the pedal body (10) or the other end of the pedal body (10), wherein, when the pedal body (10) is in a retracted state, the distance between the two farthest hinge points in the Z-axis direction selected from the first hinge point(C1), the second hinge point(C2) , the third hinge point(C3) and the fourth hinge point(C4) is less than or equal to 50mm.

7. A vehicle, comprising the electric pedal according to anyone of claim 1 to claim 6.
